# EUROPEAN PATENT APPLICATION

(11) **EP 2 728 919 A1**
(43) Date of publication of application: **07.05.2014**
(21) Application number: 13179759.9
(22) Date of filing: 08.08.2013
(51) Int. Cl.: H04W 12/12, G06F 21/88, H04L 29/06

(54) **Digital communication device and anti-theft method thereof**

(30) Priority: 01.11.2012 CN 201210430541
(71) Applicant: Huawei Technologies Co., Ltd., Longgang District, Shenzhen Guangdong 518129 (CN)
(72) Inventor: Wang, Jing, 518129 Shenzhen, Guangdong Province (CN)
(74) Representative: Epping - Hermann - Fischer

(57) **Abstract**

A digital communication device and an anti-theft method for the device are disclosed in the present invention. The digital communication device includes: a power module, configured to detect whether an external power supply of the digital communication device is lost and provide a detection result to a determining module; a power storage apparatus, configured to supply power to the digital communication device when the power module detects that the external power supply is lost; a gyroscope, configured to obtain acceleration and displacement of the digital communication device; the determining module, configured to output a locking signal when the acceleration is greater than a preset acceleration value, the displacement is greater than a preset displacement value, and the external power supply is lost; and a locking module, configured to lock the digital communication device according to the locking signal, so that the digital communication device cannot continue to be used.

## Description

### TECHNICAL FIELD

The present invention relates to the field of communications technologies, and in particular to a digital communication device and an anti-theft method for the device.

### BACKGROUND

Currently, a large number of digital communication devices are deployed in outdoor scenarios, for example, an access switch is deployed at a corridor, a distributed base station is deployed on the top of a building, and the like. These small-sized digital communication devices deployed outdoors are easily stolen. After the digital communication devices are stolen, not only economic loss is caused, but also business competitors are likely to analyze information (including configuration information and stored data information) of the digital communication devices to obtain business secrets. Therefore, it is necessary to implement anti-theft protection for digital communication devices deployed outdoors.

A conventional anti-theft method is arranging a camera in a place where a digital communication device is deployed to monitor the device. However, this method can only monitor thefts, but cannot avoid information leakage after the digital communication device is stolen.

### SUMMARY

The present invention provides a digital communication device and an anti-theft method for the device, to lock the digital communication device by identifying a theft, so that information is protected after the digital communication device is stolen.

To solve the above technical problem, according to a first aspect, the present invention provides a digital communication device, the digital communication device comprises:
a power module, configured to detect whether an external power supply of the digital communication device is lost and provide a detection result to a determining module;
a power storage apparatus connected to the power module, configured to supply power to the digital communication device when the power module detects that the external power supply is lost;
a gyroscope, configured to obtain acceleration and displacement of the digital communication device;
the determining module connected to the gyroscope and the power module, configured to output a locking signal when the acceleration is greater than a preset acceleration value, the displacement is greater than a preset displacement value, and the detection result is that the external power supply is lost; and
a locking module connected to the determining module, configured to lock the digital communication device according to the locking signal, so that the digital communication device cannot continue to be used.

In a first implementation of the first aspect, the digital communication device further includes:
an unlocking module, configured to connect to an external unlocking apparatus and unlock the digital communication device according to a key in the external unlocking apparatus.

With reference to the first implementation of the first aspect, in a second implementation of the first aspect, the digital communication device further includes a storing module connected to the unlocking module, where the storing module stores a serial number used to identify the digital communication device;
the key is a private key and a certificate that correspond to the serial number; and
the unlocking module is configured to obtain the serial number in the storing module and the private key and the certificate in the external unlocking apparatus, and unlock the digital communication device according to the serial number, the private key, and the certificate.

With reference to the first aspect, the first implementation or the second implementation of the first aspect, in a third implementation of the first aspect, the determining module is a CPU; and
the locking module is a programmable logic device.

With reference to the first or second implementation of the first aspect, in a fourth implementation of the first aspect the external unlocking apparatus is a USBKEY that uniquely corresponds to the digital communication device.

According to a second aspect, an anti-theft method for a digital communication device is provided, the method includes:
obtaining acceleration and displacement of the digital communication device;
detecting whether an external power supply of the digital communication device is lost;
outputting a locking signal when the acceleration is greater than a preset acceleration value, the displacement is greater than a preset displacement value, and the detection result is that the external power supply is lost; and
locking the digital communication device according to the locking signal, so that the digital communication device cannot continue to be used.

In a first implementation of the second aspect, after the locking the digital communication device according to the locking signal, the method further includes:
receiving a key of an external unlocking apparatus; and
unlocking the digital communication device according to the key.

With reference to the first implementation of the second aspect, in a second implementation of the second aspect, before the unlocking the digital communication device according to the key, the method further includes: obtaining a serial number used to identify the digital communication device, where the key is a private key and a certificate that correspond to the serial number.

With reference to the second implementation of the second aspect, in a third implementation of the second aspect, the unlocking the digital communication device according to the key is: unlocking the digital communication device according to the serial number, the private key, and the certificate.

According to the digital communication device and the anti-theft method for the device that are provided in the present invention, whether a theft occurs is comprehensively determined according to acceleration, displacement, and state of an external power supply of the digital communication device; when it is determined that a theft occurs, the digital communication device is locked, so that the digital communication device cannot continue to be used. In this way, a thief cannot obtain information of the digital communication device, thereby avoiding information leakage after the digital communication device is stolen and implementing information protection after the digital communication device is stolen.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a structural block diagram of a digital communication device according to an embodiment of the present invention;
FIG. 2 is a structural block diagram of another digital communication device according to an embodiment of the present invention;
FIG. 3 is a flowchart of an anti-theft method of a digital communication device according to an embodiment of the present invention;
FIG. 4 is a flowchart of another anti-theft method of a digital communication device according to an embodiment of the present invention; and
FIG. 5 is a flowchart of still another anti-theft method of a digital communication device according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

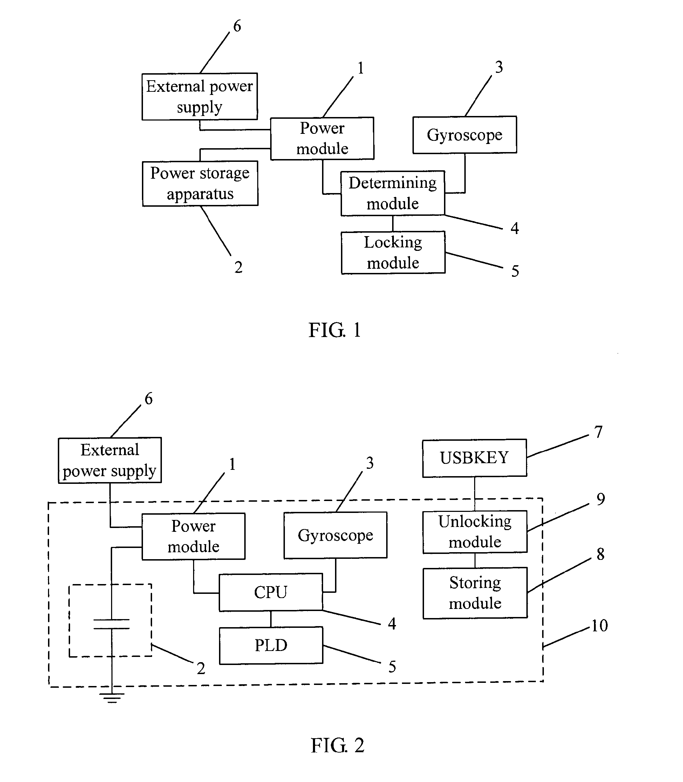

As shown in FIG. 1, an embodiment of the present invention provides a digital communication device, including a power module 1, a power storage apparatus 2, a gyroscope 3, a determining module 4, and a locking module 5.

An external power supply 6 is connected to the power module 1 and supplies power to the power module 1 when the digital communication device works normally. The power module 1 further supplies electrical power of the external power supply 6 to the digital communication device and further is configured to detect whether the external power supply 6 of the digital communication device is lost and provide a detection result to the determining module 4. Specifically, the loss of the external power supply 6 means that a connection between the external power supply 6 and the power module 1 is disconnected, for example, a power outage occurs or the external power supply 6 is pulled out in the case of a theft. The power storage apparatus 2 is connected to the power module 1 and is configured to supply power to the digital communication device when the power module 1 detects that the external power supply 6 is lost. When the external power supply 6 works normally, the power module 1 supplies power to the power storage apparatus 2, and the power storage apparatus 2 stores power. The gyroscope 3 is configured to obtain acceleration and displacement of the digital communication device and provide the obtained acceleration and displacement for the determining module 4. The determining module 4 is connected to the gyroscope 3 and the power module 1 and is configured to determine that a theft occurs when the acceleration is greater than a preset acceleration value, the displacement is greater than a preset displacement value, and the detection result is that the external power supply 6 is lost, and output a locking signal to the locking module 5. Specifically, when the digital communication device is moved, for example, when a theft occurs, the digital communication device generates acceleration and displacement. A preset acceleration value and a preset displacement value may be set according to a specific scenario where the digital communication device is placed to avoid misjudgment. The locking module 5 is connected to the determining module 4 and is configured to lock the digital communication device according to the locking signal, so that the digital communication device cannot continue to be used.

According to the digital communication device provided in this embodiment of the present invention, whether a theft occurs is comprehensively determined according to acceleration, displacement, and state of an external power supply of the digital communication device; when it is determined that a theft occurs, the digital communication device is locked, so that the digital communication device cannot continue to be used. In this way, a thief cannot obtain information of the digital communication device, thereby avoiding information leakage after the digital communication device is stolen and implementing information protection after the digital communication device is stolen. In addition, in the prior art, by using an anti-theft method using a camera for monitoring , a camera for monitoring cannot work in the case of a power failure, whereas the digital communication device can be locked even in the case of a power failure because a power storage apparatus is arranged in the digital communication device provided in this embodiment of the present invention. Furthermore, in the anti-theft method using a camera for monitoring in the prior art, camera coverage is easily bypassed, so that the digital communication device and its information may still be stolen. However, a theft is determined by using a combination of an internal power module and a gyroscope in the digital communication device provided in this embodiment of the present invention, so that the theft is identified more accurately. Therefore, information of the digital communication device cannot be stolen.

As shown in FIG. 2, further, the digital communication device 10 further includes:
an unlocking module 9, configured to connect to an external unlocking apparatus 7 outside the digital communication device 10, and unlock the digital communication device 10 according to a key in the external unlocking apparatus 7, so that the digital communication device 10 can continue to be used.

Specifically, the digital communication device 10 further includes a storing module 8 connected to the unlocking module 9, where the storing module 8 stores a serial number used to identify the digital communication device 10. The external unlocking apparatus 7 stores a key, that is, a private key and a certificate that correspond to the serial number. The unlocking module 9 is configured to obtain the serial number in the storing module 8 and the private key and the certificate in the external unlocking apparatus 7, and unlock the digital communication device according to the serial number, the private key, and the certificate.

It should be noted that the foregoing unlocking process includes a process of verifying the external unlocking apparatus by the unlocking module 9 according to a built-in encryption algorithm. The foregoing serial number is a unique identity of the digital communication device, while the external unlocking apparatus may store only the private key and the certificate that correspond to the serial number; that is, each digital communication device corresponds to a unique external unlocking apparatus. Only an external unlocking apparatus corresponding to a digital communication device can unlock the digital communication device so as to prevent thieves from unlocking the digital communication device by using other external unlocking apparatuses, thereby further ensuring the information security of the digital communication device.

Specifically, the determining module 4 may be a central processing unit (CPU); and the locking module 5 may be a programmable logic device (Programmable Logic Device, PLD). In addition to the foregoing mode in which the determining module 4 is connected to the power module 1 and the gyroscope 3 directly, the power module 1 and the gyroscope 3 may also be connected to the PLD; that is, the power module 1 and the gyroscope 3 are connected to the determining module 4 by using the PLD. In this case, loss of the external power supply and the acceleration and the displacement of the digital communication device are sent to the CPU by using the PLD, and the CPU determines whether a theft occurs.

Specifically, the external unlocking apparatus 7 may be a USBKEY that uniquely corresponds to the digital communication device. A USB interface is provided on the digital communication device and is connected to the unlocking module 9. The USBKEY is connected to the unlocking module 9 through the USB interface and provides the unlocking module 9 with the private key and the certificate required for unlocking.

Specifically, the power storage apparatus 2 may be a large-capacity capacitor, one end of which is grounded and the other end of which is connected to the power module 1 together with an output end of the external power supply, so as to ensure that the digital communication device 10 can still work for a short time when no external power supply is connected.

When the digital communication device is locked because it is wrongly determined that a theft occurs due to force majeure, after the power supplying of the external power supply and the placement of the digital communication device are recovered, an owner of the digital communication device can insert a USBKEY matching the digital communication device and start the device. The unlocking module verifies the USBKEY identity according to a built-in encryption algorithm. After the verifying succeeds, that is, after it is determined that the USBKEY is a USBKEY uniquely corresponding to the digital communication device, the digital communication device is unlocked; and if the digital communication device is not damaged, it can be normally used.

In addition, if the digital communication device needs to be moved during normal maintenance, the matching USBKEY can be inserted into the digital communication device, and then the digital communication device is moved. In this way, the digital communication device is not locked.

According to the digital communication device provided in this embodiment of the present invention, whether a theft occurs is comprehensively determined according to acceleration, displacement, and state of an external power supply of the digital communication device; when it is determined that a theft occurs, the digital communication device is locked, so that the digital communication device cannot continue to be used. In this way, a thief cannot obtain information of the digital communication device, thereby avoiding information leakage after the digital communication device is stolen and implementing information protection after the digital communication device is stolen.

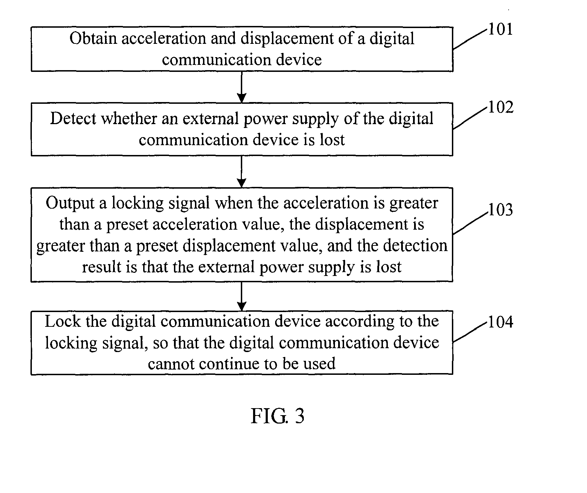

As shown in FIG. 3, an embodiment of the present invention further provides an anti-theft method of a digital communication device, including:
Step 101: Obtain acceleration and displacement of the digital communication device.

Specifically, when the digital communication device is moved, for example, when a theft occurs, acceleration and displacement are generated, and a gyroscope in the digital communication device is used to detect the acceleration and the displacement.

Step 102: Detect whether an external power supply of the digital communication device is lost.

Specifically, the loss of the external power supply means that a connection between the external power supply and the digital communication device is disconnected, for example, a power outage occurs or the external power supply is pulled out when a theft occurs.

It should be noted that step 101 and step 102 may be performed in any sequence; that is, step 102 may be performed before or after step 101 or both steps are performed simultaneously.

Step 103: Output a locking signal when the acceleration is greater than a preset acceleration value, the displacement is greater than a preset displacement value, and the detection result is that the external power supply is lost.

Specifically, the preset acceleration value and the preset displacement value may be set according to a specific scenario where the digital communication device is placed to avoid misjudgment.

Step 104: Lock the digital communication device according to the locking signal, so that the digital communication device cannot continue to be used.

According to the anti-theft method for the digital communication device provided in this embodiment of the present invention, whether a theft occurs is comprehensively determined according to acceleration, displacement, and state of an external power supply of the digital communication device; when it is determined that a theft occurs, the digital communication device is locked, so that the digital communication device cannot continue to be used. In this way, a thief cannot obtain information of the digital communication device, thereby avoiding information leakage after the digital communication device is stolen and implementing information protection after the digital communication device is stolen.

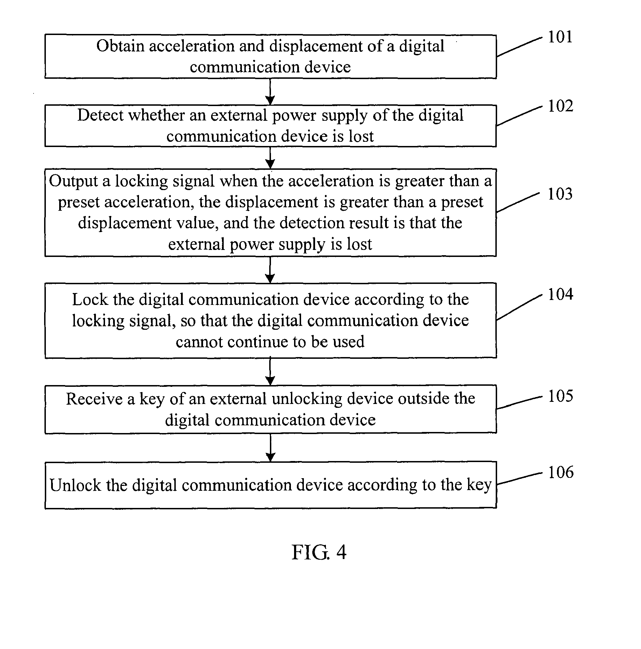

As shown in FIG. 4, further, after step 104 of locking the digital communication device according to the locking signal, the method further includes:
Step 105: Receive a key of an external unlocking apparatus outside the digital communication device.
Step 106: Unlock the digital communication device according to the key.

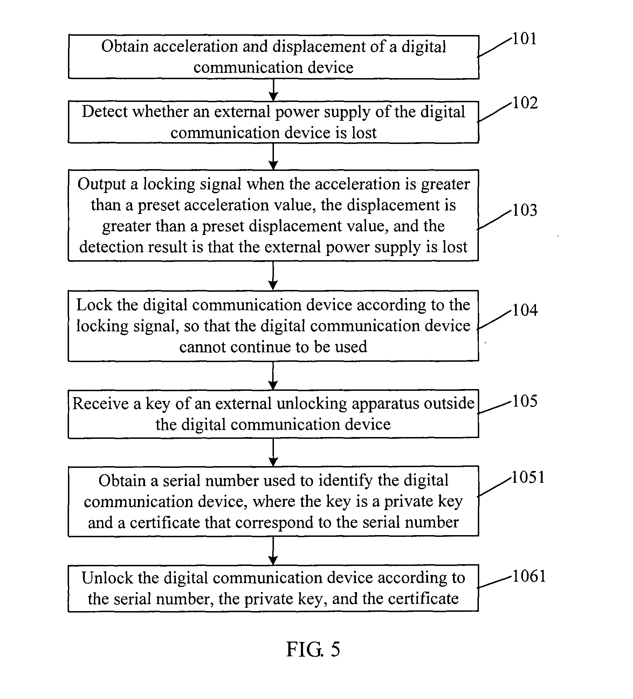

As shown in FIG. 5, further, before step 106 of unlocking the digital communication device according to the key, the method further includes:
Step 1051: Obtain a serial number used to identify the digital communication device, where the key is a private key and a certificate that correspond to the serial number.

It should be noted that step 105 and step 1051 may be performed in any sequence; that is, step 105 may be performed before or after step 1051, or both steps are performed simultaneously.

The foregoing step 106 of unlocking the digital communication device according to the key is specifically as follows:
Step 1061: Unlock the digital communication device according to the serial number, the private key, and the certificate.

The specific unlocking process is the same as that in the foregoing embodiment, and therefore no further details are provided herein. When the digital communication device is locked because it is wrongly determined that a theft occurs due to force majeure, the digital communication device can be unlocked by using an external unlocking apparatus that uniquely corresponds to the digital communication device, for example, a USBKEY, so that the digital communication device can be normally used. In addition, if the digital communication device needs to be moved during normal maintenance, the USBKEY can also be inserted into the digital communication device, and then the digital communication device is moved. In this way, the digital communication device is not locked.

According to the anti-theft method for the digital communication device provided in this embodiment of the present invention, whether a theft occurs is comprehensively determined according to acceleration, displacement, and state of an external power supply of the digital communication device; when it is determined that a theft occurs, the digital communication device is locked, so that the digital communication device cannot continue to be used. In this way, a thief cannot obtain information of the digital communication device, thereby avoiding information leakage after the digital communication device is stolen and implementing information protection after the digital communication device is stolen.

Through the foregoing description of the embodiments, it may be clearly understood by persons skilled in the art that the present invention may be implemented by software in addition to necessary universal hardware, and definitely may also be implemented by hardware. However, in many cases, the software implementation is preferred. Based on such an understanding, the technical solutions of the present invention essentially, or the part contributing to the prior art may be implemented in the form of a software product. The computer software product is stored in a readable memory medium, for example, a floppy disk, a hard disk, or an optical disk of the computer, and includes several instructions for instructing a computer device (which may be a personal computer, a server, a network device, or the like) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A digital communication device, comprising:
a power module, configured to detect whether an external power supply of the digital communication device is lost and provide a detection result to a determining module;
a power storage apparatus connected to the power module, configured to supply power to the digital communication device when the power module detects that the external power supply is lost;
a gyroscope, configured to obtain acceleration and displacement of the digital communication device;
the determining module connected to the gyroscope and the power module, configured to output a locking signal when the acceleration is greater than a preset acceleration value, the displacement is greater than a preset displacement value, and the detection result is that the external power supply is lost; and
a locking module connected to the determining module, configured to lock the digital communication device according to the locking signal, so that the digital communication device cannot continue to be used.

2. The digital communication device according to claim 1, further comprising:
an unlocking module, configured to connect to an external unlocking apparatus and unlock the digital communication device according to a key in the external unlocking apparatus.

3. The digital communication device according to claim 2, wherein:
the digital communication device further comprises a storing module connected to the unlocking module, wherein the storing module stores a serial number used to identify the digital communication device;
the key is a private key and a certificate that correspond to the serial number; and
the unlocking module is configured to obtain the serial number in the storing module and the private key and the certificate in the external unlocking apparatus, and unlock the digital communication device according to the serial number, the private key, and the certificate.

4. The digital communication device according to any one of claims 1 to 3, wherein:
the determining module is a central processing unit, CPU; and
the locking module is a programmable logic device.

5. The digital communication device according to claim 2 or 3, wherein:
the external unlocking apparatus is a USBKEY that uniquely corresponds to the digital communication device.

6. An anti-theft method of a digital communication device, comprising:
obtaining acceleration and displacement of the digital communication device;
detecting whether an external power supply of the digital communication device is lost;
outputting a locking signal when the acceleration is greater than a preset acceleration value, the displacement is greater than a preset displacement value, and a detection result is that the external power supply is lost; and
locking the digital communication device according to the locking signal, so that the digital communication device cannot continue to be used.

7. The method according to claim 6, wherein after the locking the digital communication device according to the locking signal, the method further comprises:
receiving a key of an external unlocking apparatus; and
unlocking the digital communication device according to the key.

8. The method according to claim 7, wherein:
before the unlocking the digital communication device according to the key, the method further comprises: obtaining a serial number used to identify the digital communication device, wherein the key is a private key and a certificate that correspond to the serial number.

9. The method according to claim 8, wherein the unlocking the digital communication device according to the key is: unlocking the digital communication device according to the serial number, the private key, and the certificate.
